(19) Europäisches Patentamt
European Patent Office
Office européen des brevets

(11) **EP 4 776 586 A1**

(12) **EUROPEAN PATENT APPLICATION**

(43) Date of publication:
**15.07.2026 Bulletin 2026/29**

(21) Application number: **25225704.3**

(22) Date of filing: **19.12.2025**

(51) International Patent Classification (IPC):
***H04L 27/26*** *(2006.01)*

(52) Cooperative Patent Classification (CPC):
**H04L 27/26025; H04L 27/2602; H04L 27/2628;
H04L 27/2634**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **30.12.2024 US 202463740132 P
15.07.2025 US 202519269470**

(71) Applicant: **Avago Technologies International
Sales
Pte. Limited
Singapore 768923 (SG)**

(72) Inventors:
• **Stopler, Daniel
Irvine, 92618 (US)**
• **Pitarasho, Gal
Irvine, 92618 (US)**
• **Puducheri Sundaravaradhan, Srinath
Irvine, 92618 (US)**
• **Ramkumar, Ananthakrishnan
92618 Irvine (NL)**
• **Porat, Ron
Irvine, 92618 (US)**

(74) Representative: **Dilg, Haeusler, Schindelmann
Patentanwaltsgesellschaft mbH
Leonrodstraße 58
80636 München (DE)**

(54) **SYSTEMS AND METHODS FOR ADAPTING TONE-MAPPING DISTANCE**

(57)    A wireless device may include a transmitter and one or more processors. The processors may be configured to receive a plurality of spatial streams of encoded data corresponding to a number of spatial streams. The processors may be configured to modulate encoded bits of the encoded data to a set of modulated symbols using a number of bits per subcarrier stream (NBPSCS). The processors may be configured to determine a tone-mapping distance based at least on the number of spatial streams and the NBPSCS. The processors may be configured to map the set of modulated symbols onto a set of frequency subcarriers using the determined tone-mapping distance. The transmitter may be configured to transmit the encoded data to another wireless device using the set of frequency subcarriers.

FIG. 2

Description

## Field of the Disclosure

This disclosure generally relates to systems and methods for adapting a tone-mapping distance (DTM) based on number of streams, number of segments and/or number of bits per sub-carrier stream.

## Background of the Disclosure

The market for wireless communications devices has been growing due to increased use of portable devices, increased connectivity and data transfer between all manners of devices. Digital switching techniques have facilitated the large scale deployment of affordable, easy-to-use wireless communication networks. Wireless communication can operate in accordance with various standards, such as the IEEE 802.11x (e.g., Wi-Fi technology), Bluetooth, global system for mobile communications (GSM), code division multiple access (CDMA). Using such technologies, wireless communication devices can connect to local area networks and the internet without physical cables, communicating over radio frequencies and across various spaces and ranges.

## Brief Description of the Drawings

Various objects, aspects, features, and advantages of the disclosure will become more apparent and better understood by referring to the detailed description taken in conjunction with the accompanying drawings, in which like reference characters identify corresponding elements throughout. In the drawings, like reference numbers generally indicate identical, functionally similar, and/or structurally similar elements.

FIG. 1A is a block diagram of a network environment including one or more access points in communication with one or more devices or stations, according to some embodiments.
FIGs. 1B and 1C are block diagrams of computing devices useful in connection with the methods and systems described herein, according to some embodiments.
FIG. 2 is a block diagram of an example wireless transmission system for adapting DTM, according to some embodiments.
FIG. 3 is a flow diagram showing an example process for adapting DTM, according to some embodiments.

## Detailed Description

The following disclosure provides many different embodiments, or examples, for implementing different features of the provided subject matter. Specific examples of components and arrangements are described below to simplify the present disclosure. These are, of course, merely examples and are not intended to be limiting. For example, a first feature in communication with or communicatively coupled to a second feature in the description that follows may include embodiments in which the first feature is in direct communication with or directly coupled to the second feature and may also include embodiments in which additional features may intervene between the first and second features, such that the first feature is in indirect communication with or indirectly coupled to the second feature. In addition, the present disclosure may repeat reference numerals and/or letters in the various examples. This repetition is for the purpose of simplicity and clarity and does not in itself dictate a relationship between the various embodiments and/or configurations discussed.

The following IEEE standard(s), including any draft versions of such standard(s), are hereby incorporated herein by reference in their entirety and are made part of the present disclosure for all purposes: WiFi Alliance standards and IEEE 802.11 standards including but not limited to IEEE 802.11a™, IEEE 802.11b™, IEEE 802.11g™, IEEE P802.11n™; IEEE P802.11ac™; and IEEE P802.11be™ through IEEE P802.11bn™ standards. Although this disclosure can reference aspects of these standard(s), the disclosure is in no way limited by these standard(s).

For purposes of reading the description of the various embodiments below, the following descriptions of the sections of the specification and their respective contents can be helpful:

- Section A describes a network environment and computing environment which can be useful for practicing embodiments described herein; and
- Section B describes embodiments of systems and methods for adapting DTM.

A. Computing and Network Environment

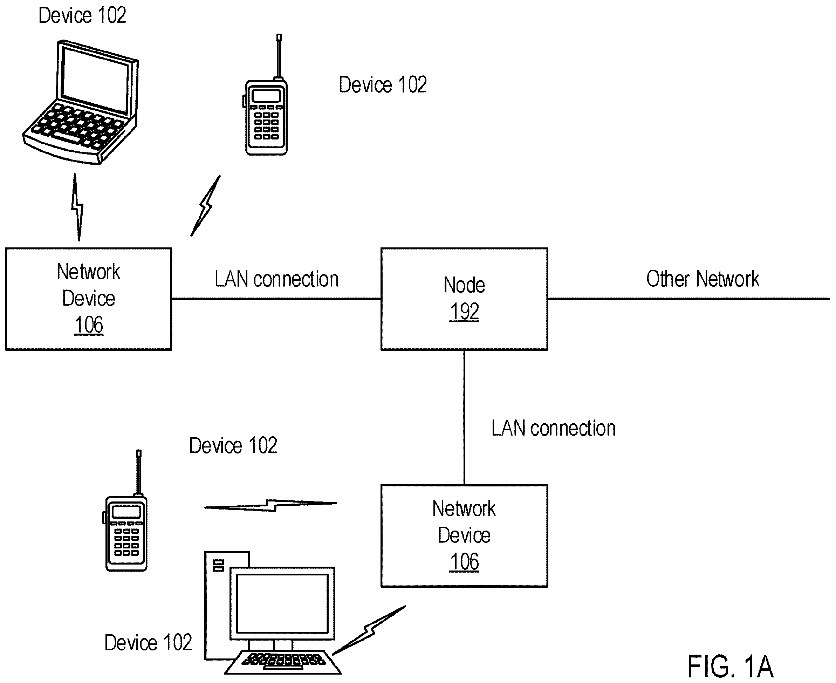

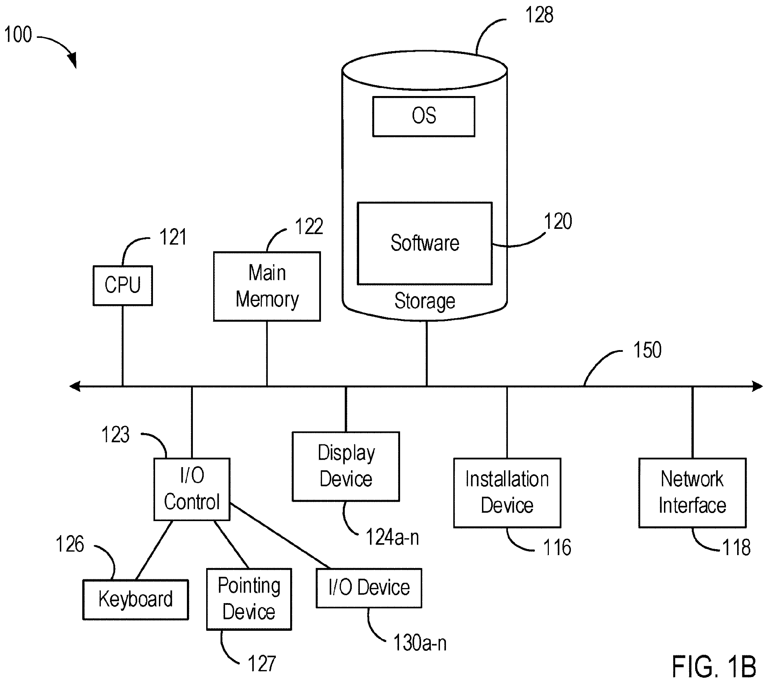

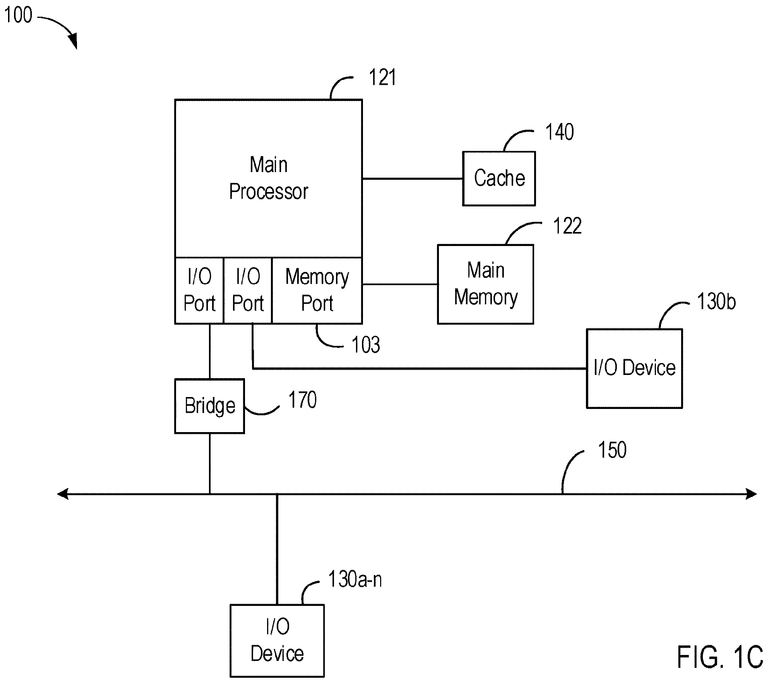

Prior to discussing specific embodiments of the present solution, it can be helpful to describe aspects of the operating environment as well as associated system components (e.g., hardware elements) in connection with the methods and systems described herein. Referring to FIG. 1A, an embodiment of a network environment is depicted. In brief overview, the network environment includes a wireless communication system that includes one or more access points (APs) or network devices 106, one or more stations or wireless communication devices 102 and a network hardware component or network hardware 192. The wireless communication devices 102 can for example include laptop computers, tablets, personal computers, and/or cellular telephone devices. The details of an embodiment of each station or wireless communication device 102 and AP or network device 106 are described in greater detail with reference to FIGS. 1B and 1C. The network environment can be an ad hoc network environment, an infrastructure wireless network environment, a subnet environment, etc. in one embodiment. The network devices 106 or APs can be operably coupled to the network hardware 192 via local area network connections. Network devices 106 are 5G base stations in some embodiments. The network hardware 192, which can include a router, gateway, switch, bridge, modem, system controller, appliance, etc., can provide a local area network connection for the communication system. Each of the network devices 106 or APs can have an associated antenna or an antenna array to communicate with the wireless communication devices in its area. The wireless communication devices 102 can register with a particular network device 106 or AP to receive services from the communication system (e.g., via a SU-MIMO or MU-MIMO configuration). For direct connections (e.g., point-to-point communications), some wireless communication devices can communicate directly via an allocated channel and communications protocol. Some of the wireless communication devices 102 can be mobile or relatively static with respect to network device 106 or AP.

In some embodiments, a network device 106 or AP includes a device or module (including a combination of hardware and software) that allows wireless communication devices 102 to connect to a wired network using wireless-fidelity (WiFi), or other standards. A network device 106 or AP can sometimes be referred to as a wireless access point (WAP). A network device 106 or AP can be implemented (e.g., configured, designed and/or built) for operating in a wireless local area network (WLAN). A network device 106 or AP can connect to a router (e.g., via a wired network) as a standalone device in some embodiments. In other embodiments, network device 106 or AP can be a component of a router. Network device 106 or AP can provide multiple devices access to a network. Network device 106 or AP can, for example, connect to a wired Ethernet connection and provide wireless connections using radio frequency links for other devices 102 to utilize that wired connection. A network device 106 or AP can be implemented to support a standard for sending and receiving data using one or more radio frequencies. Those standards, and the frequencies they use can be defined by the IEEE (e.g., IEEE 802.11 standards). A network device 106 or AP can be configured and/or used to support public Internet hotspots, and/or on a network to extend the network's Wi-Fi signal range.

In some embodiments, the access points or network devices 106 can be used for (e.g., in-home, in-vehicle, or in-building) wireless networks (e.g., IEEE 802.11, Bluetooth, ZigBee, any other type of radio frequency based network protocol and/or variations thereof). Each of the wireless communication devices 102 can include a built-in radio and/or is coupled to a radio. Such wireless communication devices 102 and /or access points or network devices 106 can operate in accordance with the various aspects of the disclosure as presented herein to enhance performance, reduce costs and/or size, and/or enhance broadband applications. Each wireless communication device 102 can have the capacity to function as a client node seeking access to resources (e.g., data, and connection to networked nodes such as servers) via one or more access points or network devices 106.

The network connections can include any type and/or form of network and can include any of the following: a point-to-point network, a broadcast network, a telecommunications network, a data communication network, a computer network. The topology of the network can be a bus, star, or ring network topology. The network can be of any such network topology as known to those ordinarily skilled in the art capable of supporting the operations described herein. In some embodiments, different types of data can be transmitted via different protocols. In other embodiments, the same types of data can be transmitted via different protocols.

The communications device(s) 102 and access point(s) or network devices 106 can be deployed as and/or executed on any type and form of computing device, such as a computer, network device or appliance capable of communicating on any type and form of network and performing the operations described herein. FIGS. 1B and 1C depict block diagrams of a computing device 100 useful for practicing an embodiment of the wireless communication devices 102 or network device 106. As shown in FIGS. 1B and 1C, each computing device 100 includes a processor 121 (e.g., central processing unit), and a main memory unit 122. As shown in FIG. 1B, a computing device 100 can include a storage device 128, an installation device 116, a network interface 118, an I/O controller 123, display devices 124a-124n, a keyboard 126 and a pointing device 127, such as a mouse. The storage device 128 can include an operating system and/or software. As shown in FIG. 1C, each computing device 100 can also include additional optional elements, such as a memory port 103, a bridge 170, one or more input/output devices 130a-130n, and a cache memory 140 in communication with the central processing unit or processor 121.

The central processing unit or processor 121 is any logic circuitry that responds to and processes instructions fetched from the main memory unit 122. In many embodiments, the central processing unit or processor 121 is provided by a microprocessor unit, such as: those manufactured by Intel Corporation of Santa Clara, California; those manufactured by International Business Machines of White Plains, New York; or those manufactured by Advanced Micro Devices of Sunnyvale, California. The computing device 100 can be based on any of these processors, or any other processor capable of operating as described herein.

Main memory unit 122 can be one or more memory chips capable of storing data and allowing any storage location to be directly accessed by the microprocessor or processor 121, such as any type or variant of Static random access memory (SRAM), Dynamic random access memory (DRAM), Ferroelectric RAM (FRAM), NAND Flash, NOR Flash and Solid State Drives (SSD). The main memory unit 122 can be based on any of the above described memory chips, or any other available memory chips capable of operating as described herein. In the embodiment shown in FIG. 1B, the processor 121 communicates with main memory unit 122 via a system bus 150 (described in more detail below). FIG. 1C depicts an embodiment of a computing device 100 in which the processor communicates directly with main memory unit 122 via a memory port 103. For example, in FIG. 1C the main memory unit 122 can be DRDRAM.

FIG. 1C depicts an embodiment in which the main processor 121 communicates directly with cache memory 140 via a secondary bus, sometimes referred to as a backside bus. In other embodiments, the main processor 121 communicates with cache memory 140 using the system bus 150. Cache memory 140 typically has a faster response time than main memory unit 122 and is provided by, for example, SRAM, BSRAM, or EDRAM. In the embodiment shown in FIG. 1C, the processor 121 communicates with various I/O devices 130 via a local system bus 150. Various buses can be used to connect the central processing unit or processor 121 to any of the I/O devices 130, for example, a VESA VL bus, an ISA bus, an EISA bus, a MicroChannel Architecture (MCA) bus, a PCI bus, a PCI-X bus, a PCI-Express bus, or a NuBus. For embodiments in which the I/O device is a video display 124, the processor 121 can use an Advanced Graphics Port (AGP) to communicate with the display 124. FIG. 1C depicts an embodiment of a computer or computer system 100 in which the main processor 121 can communicate directly with I/O device 130b, for example via HYPERTRANSPORT, RAPIDIO, or INFINIBAND communications technology. FIG. 1C also depicts an embodiment in which local busses and direct communication are mixed: the processor 121 communicates with I/O device 130a using a local interconnect bus while communicating with I/O device 130b directly.

A wide variety of I/O devices 130a-130n can be present in the computing device 100. Input devices include keyboards, mice, trackpads, trackballs, microphones, dials, touch pads, touch screen, and drawing tablets. Output devices include video displays, speakers, inkjet printers, laser printers, projectors and dye-sublimation printers. The I/O devices can be controlled by an I/O controller 123 as shown in FIG. 1B. The I/O controller can control one or more I/O devices such as a keyboard 126 and a pointing device 127, e.g., a mouse or optical pen. Furthermore, an I/O device can also provide storage and/or an installation medium for the computing device 100. In still other embodiments, the computing device 100 can provide USB connections (not shown) to receive handheld USB storage devices such as the USB Flash Drive line of devices manufactured by Twintech Industry, Inc. of Los Alamitos, California.

Referring again to FIG. 1B, the computing device 100 can support any suitable installation device 116, such as a disk drive, a CD-ROM drive, a CD-R/RW drive, a DVD-ROM drive, a flash memory drive, tape drives of various formats, USB device, hard-drive, a network interface, or any other device suitable for installing software and programs. The computing device 100 can further include a storage device, such as one or more hard disk drives or redundant arrays of independent disks, for storing an operating system and other related software, and for storing application software programs such as any program or software 120 for implementing (e.g., configured and/or designed for) the systems and methods described herein. Optionally, any of the installation devices 116 could also be used as the storage device. Additionally, the operating system and the software can be run from a bootable medium.

Furthermore, the computing device 100 can include a network interface 118 to interface to a network through a variety of connections including, but not limited to, standard telephone lines, LAN or WAN links (e.g., 802.11, T1, T3, 56kb, X.25, SNA, DECNET), broadband connections (e.g., ISDN, Frame Relay, ATM, Gigabit Ethernet, Ethernet-over-SONET), wireless connections, or some combination of any or all of the above. Connections can be established using a variety of communication protocols (e.g., TCP/IP, IPX, SPX, NetBIOS, Ethernet, ARCNET, SONET, SDH, Fiber Distributed Data Interface (FDDI), RS232, IEEE 802.11, IEEE 802.11a, IEEE 802.11b, IEEE 802.11g, IEEE 802.11n, IEEE 802.11ac, IEEE 802.11ad, CDMA, GSM, WiMax and direct asynchronous connections). In one embodiment, the computing device 100 communicates with other computing devices 100' via any type and/or form of gateway or tunneling protocol such as Secure Socket Layer (SSL) or Transport Layer Security (TLS). The network interface 118 can include a built-in network adapter, network interface card, PCMCIA network card, card bus network adapter, wireless network adapter, USB network adapter, modem or any other device suitable for interfacing the computing device 100 to any type of network capable of communication and performing the operations described herein.

In some embodiments, the computing device 100 can include or be connected to one or more display devices 124a-124n. As such, any of the I/O devices 130a-130n and/or the I/O controller 123 can include any type and/or form of suitable hardware, software, or combination of hardware and software to support, enable or provide for the connection and use of the display device(s) 124a-124n by the computing device 100. For example, the computing device 100 can include any type and/or form of video adapter, video card, driver, and/or library to interface, communicate, connect or otherwise use the display device(s) 124a-124n. In one embodiment, a video adapter can include multiple connectors to interface to the display device(s) 124a-124n. In other embodiments, the computing device 100 can include multiple video adapters, with each video adapter connected to the display device(s) 124a-124n. In some embodiments, any portion of the operating system of the computing device 100 can be configured for using multiple display devices 124a-124n. In further embodiments, an I/O device 130 can be a bridge between the system bus 150 and an external communication bus, such as a USB bus, an Apple Desktop Bus, an RS-232 serial connection, a SCSI bus, a FireWire bus, a FireWire 800 bus, an Ethernet bus, an AppleTalk bus, a Gigabit Ethernet bus, an Asynchronous Transfer Mode bus, a FibreChannel bus, a fiber optic bus, a Serial Attached small computer system interface bus, a USB connection, or a HDMI bus.

A computing device 100 of the sort depicted in FIGS. 1B and 1C can operate under the control of an operating system, which controls scheduling of tasks and access to system resources. The computing device 100 can be running any operating system such as any of the versions of the MICROSOFT WINDOWS operating systems, the different releases of the Unix and Linux operating systems, any version of the MAC OS for Macintosh computers, any embedded operating system, any real-time operating system, any open source operating system, any proprietary operating system, any operating systems for mobile computing devices, or any other operating system capable of running on the computing device and performing the operations described herein. Typical operating systems include, but are not limited to: Android, produced by Google Inc.; WINDOWS 7, 8 and 10, produced by Microsoft Corporation of Redmond, Washington; MAC OS, produced by Apple Computer of Cupertino, California; WebOS, produced by Research In Motion (RIM); OS/2, produced by International Business Machines of Armonk, New York; and Linux, a freely-available operating system distributed by Caldera Corp. of Salt Lake City, Utah, or any type and/or form of a Unix operating system, among others.

The computer system or computing device 100 can be any workstation, telephone, desktop computer, laptop or notebook computer, server, handheld computer, mobile telephone or other portable telecommunications device, media playing device, a gaming system, mobile computing device, or any other type and/or form of computing, telecommunications or media device that is capable of communication. In some embodiments, the computing device 100 can have different processors, operating systems, and input devices consistent with the device. For example, in one embodiment, the computing device 100 is a smart phone, mobile device, tablet or personal digital assistant. Moreover, the computing device 100 can be any workstation, desktop computer, laptop or notebook computer, server, handheld computer, mobile telephone, any other computer, or other form of computing or telecommunications device that is capable of communication and that has sufficient processor power and memory capacity to perform the operations described herein.

Aspects of the operating environments and components described above will become apparent in the context of the systems and methods disclosed herein.

B. Systems and Methods for Adapting DTM

In wireless communications systems such as those based on the IEEE 802.11 standards (e.g., Wi-Fi 5 and beyond), the air interface performance is closely tied to how Low-Density Parity-Check (LDPC) encoded data is interleaved across available frequency subcarriers and spatial streams. In this interleaving process, an LDPC tone mapper can spread modulated symbols across frequency tones. To improve frequency diversity and mitigate the effects of fading, one approach used in certain configurations is known as Dual-Sub-Carrier Modulation, which maps the same encoded bits onto two separate sets of subcarriers, typically one set in the lower half of the frequency segment and one set in the upper half. This technique, along with proper tone mapping, enables LDPC codewords to benefit from the diversity available across the entire channel bandwidth.

In such Wi-Fi implementations, the tone mapping logic is largely fixed and may be designed around 80 MHz segments and a small number of spatial streams. As Wi-Fi standards have evolved to include wider bandwidths (e.g., 160 MHz or 320 MHz) and a larger number of spatial streams (e.g., the number of spatial streams $(Nss) \geq 4$), the tone-mapping configuration has not kept pace. In particular, the total number of tones that the LDPC tone mapper can effectively interleave across becomes limited when the product of $Nss \times$ the number of frequency segments (L) $\times$ the number of bits per subcarrier per spatial stream (NBPSCS) grows large. This situation leads to a reduced number of subcarriers being used per codeword, thereby shrinking the frequency diversity available to each LDPC codeword. This problem becomes especially pronounced in higher-order modulation scenarios (e.g., 1024-QAM, 4096-QAM), where NBPSCS is high. For example, when the value of $Nss \times L$ exceeds 8, or when high bandwidth and high stream configurations are used in combination, the static configuration of the tone-mapper cannot ensure that each codeword is spread across a sufficiently diverse set of subcarriers. As a result, individual codewords may be concentrated in narrower frequency regions that are susceptible to localized fading, thereby increasing packet error rates (PER) and undermining link robustness.

To address these limitations, the present disclosure proposes an enhanced interleaving framework. In some implementations, a stream parser may split the encoded bitstream into multiple spatial streams based on the value of Nss. A segment parser may divide the input into L frequency segments (e.g., corresponding to separate 80 MHz chunks of a 160 MHz or 320 MHz channel). Each segment may be modulated using a constellation mapper that processes NBPSCS bits at a time. The LDPC tone mapper, in the present disclosure, may be adapted dynamically rather than using a fixed mapping strategy.

In some implementations, the LDPC tone-mapping frequency step size (e.g., tone-mapping distance (DTM)) may be determined based on various parameters, such as the number of spatial streams (Nss), the number of frequency segments (L), the number of bits per subcarrier stream (NBPSCS), etc. By computing the DTM based on these parameters, each LDPC codeword can be spread more uniformly across the available frequency spectrum and across multiple segments and streams. This allows for improved resilience against localized channel impairments, enhances frequency diversity, and lowers the likelihood that all bits of a given codeword experience simultaneous fading. In some embodiments, the DTM value may be selected to ensure that it is an integer factor of the number of tones in a given segment or resource unit, thereby simplifying hardware implementation and preserving alignment with Wi-Fi transmission structures. As described herein, the proposed adaptive DTM technique improves interleaving effectiveness in modern Wi-Fi configurations and contributes to lower PER, more stable links, and higher throughput performance across a variety of operational scenarios.

With the foregoing in mind, the figures and description below illustrate various examples of the techniques for adaptive DTM. The figures and description below are nonlimiting examples and can be implemented as any of various other configurations while remaining within the scope of the present disclosure. Other embodiments can be used in addition or instead. Details that can be apparent to a person of ordinary skill in the art may be omitted. Some embodiments can be practiced with additional components or steps and/or without all of the components or steps that are described.

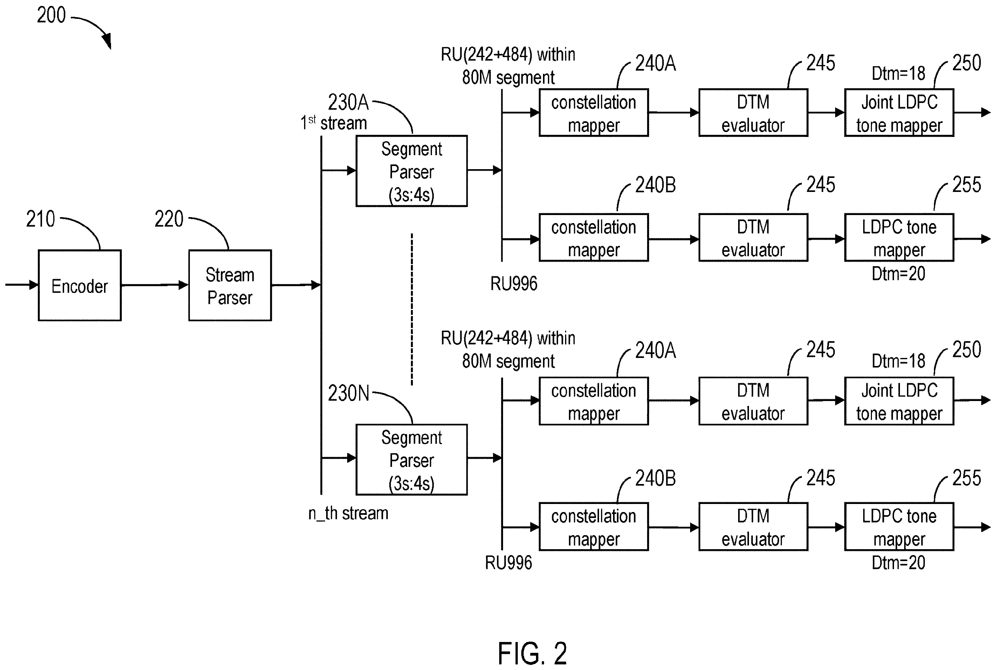

FIG. 2 is a block diagram of an example wireless transmission system 200 for adapting DTM, according to some embodiments. The wireless transmission system 200 may be implemented within a "wireless device" including a "transmitter" and one or more processors (e.g., the processor 121). The "wireless device" as used herein may refer to an access point, a network device (e.g., the network device 106), a communication device (e.g., the communication device 102), or any device, circuitry, or system that can transmit wireless signals in accordance with the techniques described herein. The "transmitter" as used herein may refer to a radio frequency (RF) transmitter, an optical transmitter, a millimeter-wave transmitter, a baseband signal generator, or any device, circuitry, or system that can generate, encode, and transmit wireless signals over a communication medium.

In some implementations, as shown in FIG. 2, the wireless transmission system 200 may include an encoder 210, a stream parser 220, one or more segment parsers 230A-N (collectively referred to as segment parsers 230), one or more constellation mappers 240A, B (collectively referred to as constellation mappers 240), one or more DTM evaluator 245, and one or more joint LDPC tone mappers 250 (and/or LDPC tone mappers 255). Although the wireless transmission system 200 of FIG. 2 is shown to include both the joint LDPC tone mappers 250 and the LDPC tone mappers 255, in some examples, the wireless transmission system 200 may include one or more joint LDPC tone mappers 250. In other examples, the transmission system 200 may include one or more LDPC tone mappers 255). In addition, while the joint LDPC tone mappers 250 and the LDPC tone mappers 255 are shown or described separately (e.g., for different segments based on their specific sizes), the joint LDPC tone mappers 250 and the LDPC tone mappers 255 may be configured to be interchangeably used. The encoder 210, the stream parser 220, the segment parsers 230, the constellation mappers 240, the joint LDPC tone mappers 250, and the LDPC tone mappers 255 may be implemented using one or more processors (e.g., the processor 121), processing components, or any circuitry, device, or system configured to perform the described operations.

The stream parser 220 may receive a plurality of spatial streams of encoded data corresponding to a number of spatial streams (e.g., Nss). The stream parser 220 may operate on encoded data output from the encoder 210. As used herein, the "encoded data" may refer to any sequence of bits generated by a forward error correction process such as LDPC encoding, including parity bits, codewords, or any formatted bitstream suitable for wireless transmission. The "spatial stream" as used herein may refer to any distinct transmission path configured to carry a data stream, including a multiple input, multiple output (MIMO) layer, antenna path, beamformed signal path, or any logical or physical channel supporting spatial multiplexing. As used herein, the "number of spatial streams" may refer to any integer value representing the count of such spatial streams, such as a static or negotiated parameter (e.g., Nss = 1, 2, 4, or more). The stream parser 220 may distribute the encoded data across the Nss spatial streams to support parallel processing and transmission, enabling improved spectral efficiency in wireless communications.

The segment parser 230 may divide each spatial stream into a plurality of frequency segments corresponding to a number of frequency segments (e.g., the number of segments, L). The "frequency segment" as used herein may refer to a contiguous or non-contiguous portion of a wireless channel, such as an 80 MHz segment within a 160 MHz or 320 MHz Wi-Fi channel, or any logical division of a transmission bandwidth over which modulation and tone-mapping may be independently performed. In some examples, each spatial stream may be distributed across L segments for parallel modulation and interleaving. The "number of frequency segments" may indicate a count of such segments (e.g., L = 2 for 160 MHz or L = 4 for 320 MHz) and may reflect static configuration, negotiated capability, or dynamic channel width. This division supports subsequent processing steps, such as modulation and adaptive tone mapping, that may be performed on a per-segment basis.

The constellation mapper 240 may modulate encoded bits of the encoded data to a set of modulated symbols using a number of bits per subcarrier stream (NBPSCS). The "encoded bits" as used herein may refer to bits of the encoded data that have been generated through a forward error correction scheme (e.g., LDPC encoding) and are to be modulated for transmission over a wireless medium. The "modulated symbol" as used herein may refer to a complex symbol (e.g., I/Q values) produced by mapping a sequence of bits to a constellation point in a modulation scheme such as BPSK, QPSK, 16-QAM, 64-QAM, 256-QAM, 1024-QAM, 4K-QAM, or any modulation technique that assigns bit patterns to amplitude and/or phase values. The "NBPSCS" may refer to the number of encoded bits that are mapped to a single stream of each frequency-domain subcarrier during modulation, and may vary across transmission modes or based on negotiated capabilities. Alternately NBPSCS may be a vector of size (Nss x 1) where for each entry s indicates the QAM bits for stream s, which could vary between the streams. In some implementations, the NBPSCS may be determined per resource unit (RU) or frequency segment and may influence the tone-mapping and interleaving depth in downstream processing. The constellation mapper 240 may perform modulation in accordance with WLAN standards such as IEEE 802.11be or any wireless communication protocol that enables adaptive modulation based on channel conditions or configuration.

In some implementations, the DTM evaluator 245 may determine a DTM based at least on the number of spatial streams, the number of frequency segments, and/or the NBPSCS. The "tone-mapping distance" or "DTM" as used herein may refer to a numerical value or spacing parameter used to distribute encoded bits across frequency subcarriers such that the codeword is dispersed over the frequency domain to improve reliability and reduce burst errors. The DTM may be computed or selected by the DTM evaluator 245 based on how many spatial streams are currently in use (e.g., Nss), which reflects the level of spatial multiplexing, the NBPSCS, and/or the modulation density. By taking these parameters into account, the DTM evaluator 245 may ensure that each spatial stream has an appropriate interleaving or spreading of bits across the spectrum, balancing complexity and robustness.

In some implementations, the DTM evaluator 245 may determine the DTM based at least on the number of frequency segments and the codeword size. The "codeword size" as used herein may refer to a total number of bits (e.g., NLDPC) output by the encoder 210 per codeword and subject to tone mapping prior to transmission. The number of frequency segments may correspond to how the spectrum is divided across RUs or physical bandwidth segments. By using both the number of segments and the size of the codeword, the DTM evaluator 245 may determine the DTM that maintains codeword continuity or desired interleaving properties across segments. This may enhance decoding robustness by ensuring that adjacent bits are transmitted over non-adjacent ones or across different segments.

In some implementations, the DTM evaluator 245 may determine a DTM for a first frequency segment among a plurality of frequency segments based on a number of frequency subcarriers corresponding to that first segment. Each of the plurality of frequency segments may have a respective number of frequency subcarriers allocated for data transmission. The "frequency subcarriers" as used herein may refer to subcarrier tones, tone bins, resource elements, or any spectral subdivisions of a frequency domain that can be modulated to carry encoded information in a wireless communication system. In some examples, the segment parser 230 may separate each spatial stream into L frequency segments, and for each segment i, the DTM evaluator 245 may determine a DTM value RU_DTM(i) using the number of data-carrying subcarriers (e.g., RU_DATA_TONES(i) data tones) corresponding to that segment and previously discussed parameters. This determination may allow the joint LDPC tone mapper 250 (and/or LDPC tone mapper 255) to spread codeword data across subcarriers within each segment in a controlled and predictable manner, supporting robust tone interleaving across segmented bandwidth allocations.

For example for scalar NBPSCS,

$$\mathrm{RU\_DTM}(i) \approx \mathrm{RU\_DATA\_TONES}(i) \cdot (\mathrm{Nss} \cdot \mathrm{L} \cdot \mathrm{NBPSCS}) \, / \, \mathrm{NLDPC}$$

For example for vector NBPSCS_vec,

$$\mathrm{RU\_DTM}(i) \sim= \mathrm{RU\_DATA\_TONES}(i) \cdot (\mathrm{L} \cdot (\textstyle\sum \mathrm{NBPSCS\_vec})) \, / \, \mathrm{NLDPC}$$

where $\Sigma$ NBPSCS_vec indicates summation of elements of the vector NBPSCS_vec.

The DTM evaluator 245 may determine the DTM (e.g., RU_DTM(i)) for a given frequency segment such that the value is an integer factor of the number of frequency subcarriers in that segment. For example, if a particular segment includes 980 data subcarriers (e.g., in a 996-tone RU), the DTM may be selected as 35 or 49, or another integer that evenly divides 980. This approach allows the mapper to uniformly interleave encoded data across the frequency subcarriers without remainder, preserving predictable tone allocation patterns and simplifying implementation.

In some implementations, the encoded data may have a codeword size, which may represent the length or size of a data block encoded using a forward error correction scheme such as LDPC coding. For example, the encoder 210 may encode input data into a codeword having a defined length (e.g., NLDPC) according to LDPC coding rules. The DTM evaluator 245 may determine the DTM based at least on this codeword size. For instance, the DTM evaluator 245 may divide or interleave the encoded bits of the codeword across frequency subcarriers in a manner that balances frequency diversity and decoding efficiency, based on the relationship between the codeword size and the number of available subcarriers. Accordingly, the DTM may reflect a spacing or distribution pattern that accommodates the size of the encoded codeword during tone mapping.

In some implementations, the set of frequency subcarriers may be an RU. Each RU may correspond to a group of frequency tones used for wireless data transmission. The DTM evaluator 245 may then determine the DTM for the RU (e.g., RU_DTM) using a number of frequency subcarriers included in that RU. The number of frequency subcarriers may vary depending on the RU configuration, such as 996-RU, 484-RU, or other channelization profiles. The DTM for the RU may be selected as an integer factor of the number of frequency subcarriers in the RU. For example, if the RU includes 980 data tones, the determined DTM (RU_DTM) may be 49, which is an integer factor of 980. Selecting an integer factor facilitates even distribution of encoded bits or modulated symbols across the subcarriers within the RU, supporting decoding performance and spectral balance. In some implementations, in which there are more than one segment (e.g., L>1), a codeword may be interleaved over more than one segment (e.g., L segments). The DTM evaluator 245 may then determine the DTM separately (e.g., as described herein for each of the interleaved segments), for example, the DTM per RU.

The joint LDPC tone mapper 250 (and/or the LDPC tone mapper 255) may map the set of modulated symbols onto a set of frequency subcarriers (e.g., RU) using the determined DTM. For instance, after modulation by the constellation mapper 240, the modulated symbols may be arranged across the frequency subcarriers in a manner governed by the DTM determined for the corresponding segment or RU. The "set of frequency subcarriers" may refer to any set of frequency tones allocated for transmitting data within a segment or RU. The DTM may define how symbols are spaced or interleaved across these subcarriers, which can help improve performance by dispersing correlated errors and improving resilience to frequency-selective fading. This mapping may be performed by the joint LDPC tone mapper 250 (and/or the LDPC tone mapper 255) based on the specific system architecture.

In some implementations, the joint LDPC tone mapper 250 (and/or the LDPC tone mapper 255) may implement a tone mapping strategy defined by the 802.11 standard, in which N sets of coded bits are mapped to N tones within an 80 MHz frequency segment using a formula such as:

$$t(k) = D_{TM} \cdot mod\left(k, \frac{N}{D_{TM}}\right) + floor\left(\frac{k \cdot N}{D_{TM}}\right)$$

(*mod(X, Y)* refers to the remainder of X when divided by Y; and *floor(Z)* refers to the largest integer smaller than or equal to Z). In these implementations, each set $k$ of bits may be mapped to a corresponding tone $t(k)$, where the tone index increases by one for every offset of N/DTM in bit sets, for example, $t(k+N/DTM) = t(k) + 1$. However, in this scenario, the defined LDPC tone-mapper formula may result in sets of encoded bits being mapped to adjacent subcarriers within a frequency segment. For example, the mapping relationship may cause two sets of bits to be placed on adjacent tones. When these sets of bits belong to the same LDPC codeword, they may experience highly correlated channel conditions, reducing the effectiveness of channel frequency diversity and degrading LDPC decoding performance.

As described herein, the wireless transmission system 200 may modify the tone-mapper operation (e.g., performed by the joint LDPC tone mapper 250 and/or the LDPC tone mapper 255), thereby alleviating the above-mentioned problems. In some implementations, the modified tone-mapper may employ an alternative or additional mapping expression that distributes encoded data more evenly across the available frequency tones in a resource unit (RU) or segment. For example, this may be implemented as part of the tone-mapping logic in the joint LDPC tone mapper 250 (and/or the LDPC tone mapper 255) or integrated into downstream mapping behavior of the joint LDPC tone mapper 250 (and/or the LDPC tone mapper 255). In some implementations, the DTM evaluator 245 may determine the DTM based on modified mapping functions. In some examples, the mapping function may take the form:

$$t(k) = D_{TM} \cdot mod\left(k, \frac{N}{D_{TM}}\right) + s(l)$$

where $l = floor\left(\frac{k \cdot D_{TM}}{N}\right)$, $k$ denotes an index associated with a particular set of encoded data, DTM represents the tone-mapper distance, N denotes the total number of tones in the corresponding resource unit (RU) or frequency segment, and $s(l)$ refers to a permutation or sequence value for the $l$-th group. The sequence $s(l)$ may be selected as a predefined set of DTM distinct integers between 0 and (DTM - 1). This arrangement can help decorrelate the physical tone locations assigned to neighboring data sets (e.g., sets $k$ and k+N/DTM), reducing the risk of placing related bits onto adjacent tones. In some implementations, the sequence $s(l)$ may be generated using a modular expression, such as $s(l) = mod(l \cdot M, DTM)$, where M is an integer selected to be co-prime with DTM and lies between 0 and (DTM - 1). This form of mapping ensures that the distribution of tones is spread across the subcarrier space in a pseudo-random yet deterministic manner, improving tone separation. Accordingly, the joint LDPC tone mapper 250 (and/or the LDPC tone mapper 255) may assign tones based not only on evenly spaced intervals defined by DTM but also on a reorder sequence $s(l)$ that redistributes the tone placement within each group.

In some examples, the sequence $s(l)$ may be generated using a modular arithmetic approach with a selected integer M. One such option involves choosing M = $floor$ (DTM/2) + 1, provided that M is co-prime with the DTM. In this case, the resulting sequence $s(l)$ can be constructed to alternate values between a base and an offset pattern depending on whether the DTM is odd or even. For instance, if the DTM is odd, the sequence may take the form: s(0) = 0, s(1) = M, s(2) = 1, s(3) = M+1, and so on. If the DTM is even, the sequence may alternate as s(0) = 0, s(1) = M, s(2) = 2, s(3) = M+2, etc. When implemented by the joint LDPC tone mapper 250 (and/or the LDPC tone mapper 255), this pattern may ensure that sets of encoded bits (e.g., set $k$ and set $k$ + N/DTM) are mapped to tones separated by roughly half the spacing of the segment (e.g., approximately DTM/2 tones apart), while sets of encoded bits separated by a larger offset (e.g., $k$ and $k$ + 2N/DTM) may map to tones that are close to each other. Such controlled separation can reduce correlation between immediately adjacent groups while still maintaining predictable structure for decoder implementation.

In another example, a different mapping pattern may be generated using M = $floor$ (DTM/4) + 1, while M is co-prime with the DTM. The resulting sequence $s(l)$ may take the form: s(0) = 0, s(1) = M, s(2) = 2M, s(3) = 3M, and so on, with additional values such as s(4) depending on the value of $mod$ (DTM, 4). This construction may be used to create a tone mapping that ensures sets $k$ and $k$ + N/DTM are spaced approximately DTM/4 tones apart. At the same time, sets such as $k$ + and $k$+4N/DTM may end up mapped to adjacent tones. This type of spacing strategy may be desirable in scenarios where reduced tone adjacency is more beneficial over shorter ranges of bit groupings, allowing for enhanced frequency diversity while preserving periodic structure across a segment.

In yet other examples, the wireless transmission system 200 may select a relatively small value for M when generating the sequence $s(l)$. In this case, the separation between tones assigned to data sets offset by N/DTM may become smaller, but the tone separation between larger offsets may become more substantial. This tradeoff can allow the tone mapper logic (e.g., such as that implemented in the joint LDPC tone mapper 250 and/or the LDPC tone mapper 255) to prioritize separation between more distant bit groups while allowing for tighter spacing between neighboring ones. Such flexibility may support various optimization strategies depending on the error profile, bandwidth configuration, and segment structure.

In some implementations, the wireless transmission system 200 may support configurable strategies for generating the sequence $s(l)$ and/or selecting the parameter M used in the mapping expression above. The choice of $s(l)$ or M can provide additional flexibility to optimize how encoded bits are mapped to tones in the frequency domain. For instance, the joint LDPC tone mapper 250 and/or the LDPC tone mapper 255 may dynamically or statically select values of M and construct $s(l)$ sequences to maximize tone separation among LDPC code bits, thereby enhancing frequency diversity and improving decoder robustness to channel fading.

This flexibility may be particularly useful in adapting to per-user transmission conditions. For example, the selection of M or $s(l)$ may be based on factors such as the number of code bits per tone or subcarrier, the number of tones or subcarriers within a segment, or the total number of tones or subcarriers allocated to a given user. In some implementations, different values may be selected to tailor tone mapping for a specific set of transmission parameters. In other implementations, common values of M or $s(l)$ may be reduced across a range of conditions to simplify processing requirements, accepting a tradeoff in coding performance in favor of reduced implementation complexity in the joint LDPC tone mapper 250 and/or the LDPC tone mapper 255.

The wireless transmission system 200 may combine various mapping expressions discussed herein, either independently or in combination. For instance, the DTM may be selected or adjusted in conjunction with the sequence the joint LDPC tone mapper 250 and/or the LDPC tone mapper 255 or parameter M to optimize the layout of code bits in the frequency domain. In some scenarios, such as when a frequency allocation spans multiple full 80 MHz segments, the segment parser 230 may be bypassed. Instead, the allocated 80 MHz segments may be treated as a super-segment, and the joint LDPC tone mapper 250 may perform mapping across the entire super-segment range. In such cases, the parameters DTM, $s(l)$, and M may be tuned based on the full set of tones across the super-segment rather than being constrained to individual 80 MHz segment, allowing for broader tone distribution and potentially improved coding performance.

In accordance with Wi-Fi definitions, each RU may be contained within a single segment. When multiple segments are assigned (e.g., L segments), the allocation may be referred to as a Large Multi-RU (LMRU), which includes one RU per segment. In such cases, the DTM evaluator 245 may determine a separate DTM for each RU of the LMRU. When the RUs composing the LMRU are of the same size (e.g., each with 980 subcarriers), the DTMs may be the same across the LMRU.

The transmitter associated with the wireless transmission system 200 may be configured to transmit the encoded data to another wireless device using the set of frequency subcarriers as described herein. For example, after the joint LDPC tone mapper 250 and/or LDPC tone mapper 255 map the modulated symbols onto the frequency subcarriers based on the determined DTM, the transmitter may send the resulting signals over a wireless medium.

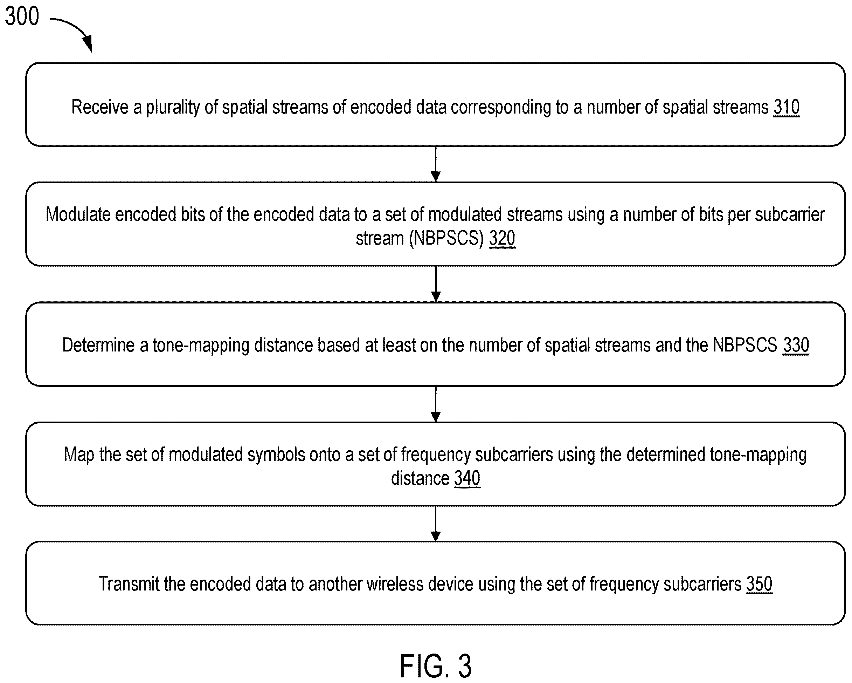

FIG. 3 is a flow diagram showing a process 300 for adapting DTM, according to some embodiments. In some embodiments, the process 300 is performed by one or more processors (e.g., the processor 121) of a device (e.g., the device 102, the network device 106, etc.). In other embodiments, the process 300 is performed by other entities. In some embodiments, the process 300 includes more, fewer, or different steps than shown in FIG. 3.

At step 310, the one or more processors may receive a plurality of spatial streams of encoded data corresponding to a number of spatial streams (e.g., Nss). In some examples, each spatial stream may be divided into a plurality of frequency segments corresponding to a number of frequency segments (e.g., the number of segments, L). In some examples, the set of frequency subcarriers may be a resource unit (RU), and each of the plurality of frequency segments may have a corresponding number of frequency subcarriers (e.g., the number of RU(i) data tones for segment i). In some examples, the encoded data may have a codeword size (e.g., NLDPC).

At step 320, the one or more processors may modulate encoded bits of the encoded data to a set of modulated streams using a number of bits per subcarrier stream (NBPSCS).

At step 330, the one or more processors may determine a tone-mapping distance (DTM) based at least on the number of spatial streams and the NBPSCS. In some examples, the DTM may be determined (e.g., by the one or more processors) using the number of frequency segments (e.g., L). In some examples, the one or more processors may determine the DTM for a first frequency segment (e.g., RU_DTM(i)), among the plurality of frequency segments, using the number of frequency subcarriers corresponding to the first frequency segment. In some examples, the tone-mapping distance for the first frequency segment is an integer factor of the number of frequency subcarriers. For example, if the number of RU(i) data tones is 980, the RU_DTM(i) can be 49. In some examples, the DTM may be determined (e.g., by the one or more processors) using the codeword size (e.g., NLDPC).

At step 340, the one or more processors may map the set of modulated symbols onto a set of frequency subcarriers (e.g., RU) using the determined tone-mapping distance. In some examples, in which the set of frequency subcarriers is an RU, the one or more processors may determine the DTM for the RU (e.g., RU_DTM) using a number of frequency subcarriers in the RU. In some examples, the tone-mapping distance for the RU may be an integer factor of the number of frequency subcarriers. For example, for 996-RU, which has 980 data tones, an RU_DTM can be 49.

At step 350, a transmitter may transmit the encoded data to another wireless device using the set of frequency subcarriers. For example, the one or more processors may transmit, via the transmitter, the encoded data to another wireless device using the set of frequency subcarriers.

As discussed herein, the present disclosure provides techniques for determining and applying DTM in wireless communication systems using multi-segment frequency allocations and multiple spatial streams. In some examples, the techniques include calculating a DTM based on one or more parameters, such as the number of spatial streams (Nss), the number of bits per subcarrier stream (NBPSCS), the number of frequency segments, and the codeword size (e.g., NLDPC). In other embodiments, a distinct DTM (e.g., RU_DTM(i)) may be determined for each segment or resource unit (RU) using the number of frequency subcarriers in that segment or RU. The DTM may be an integer factor of the number of data tones available in the corresponding segment or RU.

By allowing flexible, parameter-based determination of DTM, the described techniques enable encoded bits to be more uniformly distributed across frequency subcarriers, even in high-bandwidth environments (e.g., 160 MHz or 320 MHz) where increased channel width and resource unit diversity can otherwise reduce LDPC codeword dispersion and degrade decoding performance. These techniques may improve forward error correction effectiveness and robustness across non-contiguous or segment-based allocations. In some embodiments, the system may use a joint tone mapper for applying DTM values to multiple RUs and may support adaptive DTM strategies based on the characteristics of the encode output or the segment structure. The disclosed techniques can be implemented in transmitters compliant with wireless standards such as IEEE 802.11be and extended to support emerging modulation, coding, or resource allocation features in high-throughput wireless networks.

References to "or" may be construed as inclusive so that any terms described using "or" may indicate any of a single, more than one, and all of the described terms. References to at least one of a conjunctive list of terms may be construed as an inclusive OR to indicate any of a single, more than one, and all of the described terms. For example, a reference to "at least one of 'A' and 'B'" can include only 'A', only 'B', as well as both 'A' and 'B'. Such references used in conjunction with "comprising" or other open terminology can include additional items.

It should be noted that certain passages of this disclosure can reference terms such as "first" and "second" in connection with subsets of transmit spatial streams, sounding frames, response, and devices, for purposes of identifying or differentiating one from another or from others. These terms are not intended to merely relate entities (e.g., a first device and a second device) temporally or according to a sequence, although in some cases, these entities can include such a relationship. Nor do these terms limit the number of possible entities (e.g., STAs, APs, beamformers and/or beamformees) that can operate within a system or environment. It should be understood that the systems described above can provide multiple ones of any or each of those components and these components can be provided on either a standalone machine or, in some embodiments, on multiple machines in a distributed system. Further still, bit field positions can be changed and multibit words can be used. In addition, the systems and methods described above can be provided as one or more computer-readable programs or executable instructions embodied on or in one or more articles of manufacture, e.g., a floppy disk, a hard disk, a CD-ROM, a flash memory card, a PROM, a RAM, a ROM, or a magnetic tape. The programs can be implemented in any programming language, such as LISP, PERL, C, C++, C#, or in any byte code language such as JAVA. The software programs or executable instructions can be stored on or in one or more articles of manufacture as object code.

While the foregoing written description of the methods and systems enables one of ordinary skill to make and use embodiments thereof, those of ordinary skill will understand and appreciate the existence of variations, combinations, and equivalents of the specific embodiment, method, and examples herein. The present methods and systems should therefore not be limited by the above described embodiments, methods, and examples, but by all embodiments and methods within the scope and spirit of the disclosure.

## Claims

1. A method, comprising:

    receiving, by one or more processors, a plurality of spatial streams of encoded data corresponding to a number of spatial streams;
    modulating, by the one or more processors, encoded bits of the encoded data to a set of modulated symbols using a number of bits per subcarrier stream, NBPSCS;
    determining, by the one or more processors, a tone-mapping distance based at least on the number of spatial streams and the NBPSCS;
    mapping, by the one or more processors, the set of modulated symbols onto a set of frequency subcarriers using the determined tone-mapping distance; and
    transmitting, by a transmitter, the encoded data to another wireless device using the set of frequency subcarriers.

2. The method of claim 1, wherein

    each spatial stream is divided into a plurality of frequency segments corresponding to a number of frequency segments, and
    the tone-mapping distance is determined using the number of frequency segments.

3. The method of claim 2, wherein

    each of the plurality of frequency segments has a corresponding number of frequency subcarriers, and
    the method further comprises:
    determining a tone-mapping distance for a first frequency segment, among the plurality of frequency segments, using the number of frequency subcarriers corresponding to the first frequency segment.

4. The method of claim 3, wherein
the tone-mapping distance for the first frequency segment is an integer factor of the number of frequency subcarriers.

5. The method of any one of the claims 1 to 4, wherein
the encoded data has a codeword size, and the tone-mapping distance is determined using the codeword size.

6. The method of any one of the claims 1 to 5, wherein

    the set of frequency subcarriers is a resource unit, RU,
    the method further comprises:
    determining a tone-mapping distance for the RU using a number of frequency subcarriers in the RU.

7. The method of claim 6, wherein
the tone-mapping distance for the RU is an integer factor of the number of frequency subcarriers.

8. A wireless device comprising:

    a transmitter; and
    one or more processors, wherein the transmitter and/or the one or mor processors are configured to control and/or carry out a method as set forth in any one of the preceding claims.

9. A wireless device, comprising:

a transmitter; and
one or more processors configured to:

receive a plurality of spatial streams of encoded data, wherein each spatial stream is divided into a plurality of frequency segments corresponding to a number of frequency segments;
modulate encoded bits of the encoded data to a set of modulated symbols,

wherein the encoded data has a codeword size;

determine a tone-mapping distance based at least on the number of frequency segments and the codeword size; and
map the set of modulated symbols onto a set of frequency subcarriers using the determined tone-mapping distance,

wherein the transmitter is configured to transmit the encoded data to another wireless device using the set of frequency subcarriers.

10. The wireless device of claim 9, wherein

the plurality of spatial streams of encoded data corresponds to a number of spatial streams;
the encoded bits of the encoded data is modulated to the set of modulated symbols using a number of bits per subcarrier stream (NBPSCS);
the tone-mapping distance is determined using at least one of the number of spatial streams or the NBPSCS.

11. The wireless device of claim 9 or 10, wherein

each of the plurality of frequency segments has a corresponding number of frequency subcarriers, and
the one or more processors are configured to determine a tone-mapping distance for a first frequency segment, among the plurality of frequency segments, using the number of frequency subcarriers corresponding to the first frequency segment.

12. The wireless device of any one of the claims 9 to 11, wherein
the tone-mapping distance for the first frequency segment is an integer factor of the number of frequency subcarriers.

13. The wireless device of any one of the claims 9 to 12, wherein

the set of frequency subcarriers is a resource unit (RU),
the one or more processors are configured to determine a tone-mapping distance for the RU using a number of frequency subcarriers in the RU.

14. The wireless device of claim 13, wherein
the tone-mapping distance for the RU is an integer factor of the number of frequency subcarriers.

Device 102

Device 102

Network Device 106

LAN connection

Node 192

Other Network

Device 102

LAN connection

Network Device 106

Device 102

FIG. 1A

EP 4 776 586 A1

FIG. 1B

EP 4 776 586 A1

FIG. 1C

FIG. 2

EP 4 776 586 A1

FIG. 3

**EUROPEAN SEARCH REPORT**

Application Number

EP 25 22 5704

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2016/029397 A1 (CHEN JIALING LI [US] ET AL) 28 January 2016 (2016-01-28) <br> * paragraph [0023] - paragraph [0024] * <br> * paragraph [0130] - paragraph [0135] * <br> ----- | 1-14 | INV. <br> H04L27/26 |
| A | US 2016/344523 A1 (SRINIVASA SUDHIR [US] ET AL) 24 November 2016 (2016-11-24) <br> * paragraph [0031] - paragraph [0032] * <br> * paragraph [0039] - paragraph [0040] * <br> * paragraph [0048] * <br> ----- | 1-14 | |
| X | US 2015/349995 A1 (ZHANG HONGYUAN [US] ET AL) 3 December 2015 (2015-12-03) <br> * paragraph [0046] - paragraph [0073] * <br> ----- | 1-14 | |
| A | EP 3 855 651 A1 (MEDIATEK SINGAPORE PTE LTD [SG]) 28 July 2021 (2021-07-28) <br> * paragraph [0015] - paragraph [0016] * <br> * paragraph [0038] - paragraph [0039] * <br> * paragraph [0053] - paragraph [0054] * <br> ----- | 1-14 | |

TECHNICAL FIELDS SEARCHED (IPC)

H04L

The present search report has been drawn up for all claims

| Place of search | Date of completion of the search | Examiner |
|---|---|---|
| The Hague | 18 May 2026 | García Larrodé, M |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 25 22 5704

This annex lists the patent family members relating to the patent documents cited in the above-mentioned European search report.
The members are as contained in the European Patent Office EDP file on
The European Patent Office is in no way liable for these particulars which are merely given for the purpose of information.

18-05-2026

| Patent document cited in search report | Publication date | Patent family member(s) | | Publication date |
|---|---|---|---|---|
| US 2016029397 A1 | 28-01-2016 | CN | 106664185 A | 10-05-2017 |
| | | EP | 3172855 A1 | 31-05-2017 |
| | | JP | 2017527180 A | 14-09-2017 |
| | | KR | 20170034385 A | 28-03-2017 |
| | | US | 2016029397 A1 | 28-01-2016 |
| | | WO | 2016014666 A1 | 28-01-2016 |
| US 2016344523 A1 | 24-11-2016 | CN | 103155474 A | 12-06-2013 |
| | | EP | 2625813 A1 | 14-08-2013 |
| | | JP | 5867934 B2 | 24-02-2016 |
| | | JP | 2013545346 A | 19-12-2013 |
| | | KR | 20130108323 A | 02-10-2013 |
| | | US | 2012087436 A1 | 12-04-2012 |
| | | US | 2016344523 A1 | 24-11-2016 |
| | | US | 2017288829 A1 | 05-10-2017 |
| | | WO | 2012047758 A1 | 12-04-2012 |
| US 2015349995 A1 | 03-12-2015 | CN | 106664187 A | 10-05-2017 |
| | | EP | 3149879 A2 | 05-04-2017 |
| | | JP | 6457557 B2 | 23-01-2019 |
| | | JP | 6624754 B2 | 25-12-2019 |
| | | JP | 2017517215 A | 22-06-2017 |
| | | JP | 2019071647 A | 09-05-2019 |
| | | KR | 20170013905 A | 07-02-2017 |
| | | US | 2015349995 A1 | 03-12-2015 |
| | | US | 2018062899 A1 | 01-03-2018 |
| | | US | 2019229969 A1 | 25-07-2019 |
| | | US | 2019394076 A1 | 26-12-2019 |
| | | WO | 2015187720 A2 | 10-12-2015 |
| EP 3855651 A1 | 28-07-2021 | CN | 113225158 A | 06-08-2021 |
| | | EP | 3855651 A1 | 28-07-2021 |
| | | TW | 202135574 A | 16-09-2021 |
| | | US | 2021227510 A1 | 22-07-2021 |

EPO FORM P0459

For more details about this annex : see Official Journal of the European Patent Office, No. 12/82